# EUROPEAN PATENT APPLICATION

(11) **EP 1 488 841 A1**
(43) Date of publication of application: **22.12.2004**
(21) Application number: 04466013.2
(22) Date of filing: 10.06.2004
(51) Int. Cl.: B01D 46/44, B01D 46/42

(54) **ADVICE FOR CONTINUOUS REMOVING OF IMPURITIES FROM VACUUM**

(30) Priority: 18.06.2003 CZ 20031697
(71) Applicant: Rieter CZ a.s., 562 15 Usti nad Orlici (CZ)
(72) Inventor: Krejici, Emil, 624 00 Brno (CZ); Skvaril, Petr, 638 00 Brno (CZ)
(74) Representative: Musil, Dobroslav, Dipl.-Ing

(57) **Abstract**

A device for continuous removing of impurities from vacuum air exhausted from a textile machine comprising a filtering unit (3) positioned between a collecting device of sucked off operating units (6) and a source (1) of working vacuum.

The filtering unit (3) consists of one filter chamber (7), fitted with a polluted air inlet throat (4), an auxiliary screen (11), a main screen (9) and a purified air outlet throat (2), while the spaces behind the auxiliary screen (11) and the main screen (9) are mutually separated by a switching element (14) connecting alternatively the space behind the main screen (9) or behind the auxiliary screen (11) with the outlet throat (2).

## Description

### Technical field

The invention relates to a device for continuous removing of impurities from vacuum air exhausted from a textile machine comprising a filtering unit positioned between a collecting device of sucked off operating units of the machine and a source of working vacuum air.

### Background art

Impurities are generated while operating textile machines originating largely from a processed material and the following technological process. This matter of fact is solved by a combination of blower and suction-off device where the dust particles, fibres, etc. are freed and consequently sucked into inlet throats of a collecting device. Polluted air is then under the action of the source of vacuum usually placed in the end of the machine, conducted in the system of collecting device to the filter device, where the polluted air is cleaned off of mechanical impurities by passing through filtering elements of the filtering units.

It is important to clean filtering units periodically, that requires interruption of the manufacturing process of the textile machine by the time of cleaning.

Well-known filter devices are composed of two practically identical filtering chambers arranged in parallel. This configuration enables to switch over the way of polluted air from one filtering chamber, which was by then in operation, with no interruption of the manufacturing process of the machine, into the second filtering chamber and the temporarily non-functional filtering chamber disconnected to the manufacturing process of the machine can be cleaned. Such solutions are space demanding and are fitted with mechanical elements controlling the function of filtering chambers, which need to be controlled, moreover according to the existence of two parallel filtering chambers the system is as a matter of fact twinned. The aim of the invention is to eliminate or to significantly minimize the mentioned drawbacks.

### Principle of the invention

The goal of the invention has been reached by a device for continuous removing of impurities from vacuum air exhausted from a textile machine comprising a filtering unit positioned between a collecting device, into which a polluted air from operating units of the machine is sucked and between a source of working vacuum, where the filtering unit in its turn is composed of one filtering chamber fitted with a polluted air inlet throat, an auxiliary screen, a main screen and a cleaned air outlet throat, while the spaces behind the auxiliary screen and the main screen are mutually separated by a switching element connecting alternatively the space behind the main screen or behind the auxiliary screen with the outlet throat.

The common space behind the inlet throat in front the auxiliary screen and in front the main screen is connected or separated as necessary using an automatic flap controlled by an air pressure difference in these spaces. The space behind the main screen is fitted with an atmospheric air flap valve when after its opening this space is connected to atmosphere and control of the atmospheric air flap valve is coupled with control of the switching element. The automatic flap controls the intake of polluted air to the main or auxiliary screen, through the open atmospheric air flap valve air is sucked by the time of cleaning the main screen by the source of cleaning vacuum, which is connected to the automatic cleaning throat positioned in the space in front the main screen.

To reach self-cleaning properties of the auxiliary screen it is advantageous if the surface of the screen is approximately parallel to the direction of flowing polluted air by the time when above mentioned automatic flap is open and the filtering device is in operating state.

### Description of the drawings

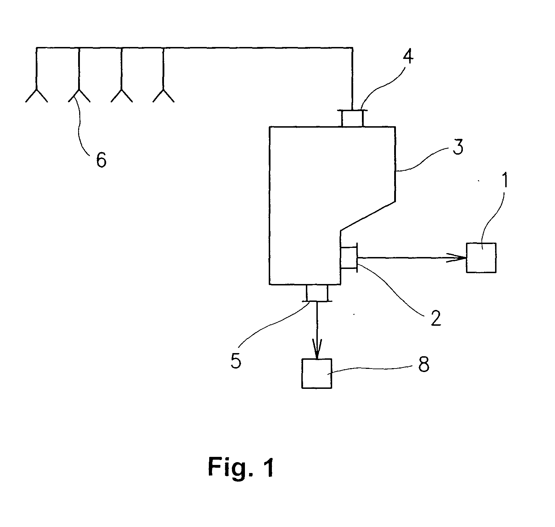

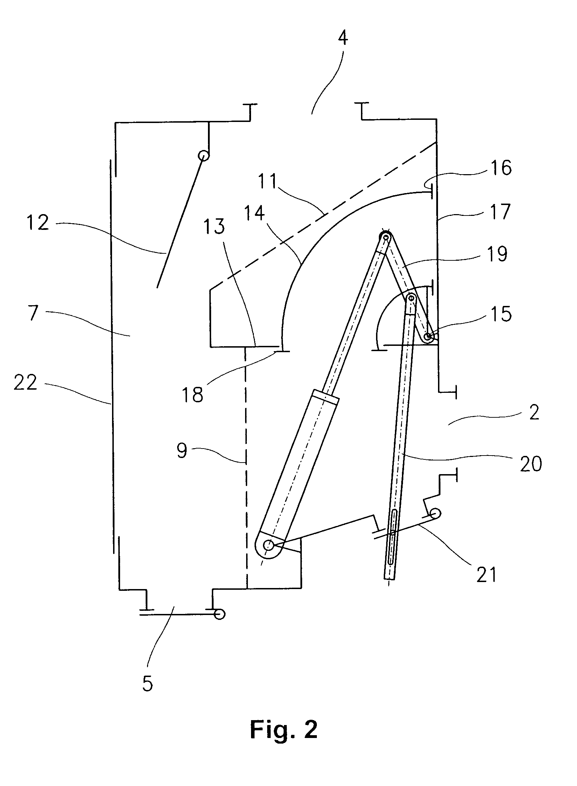

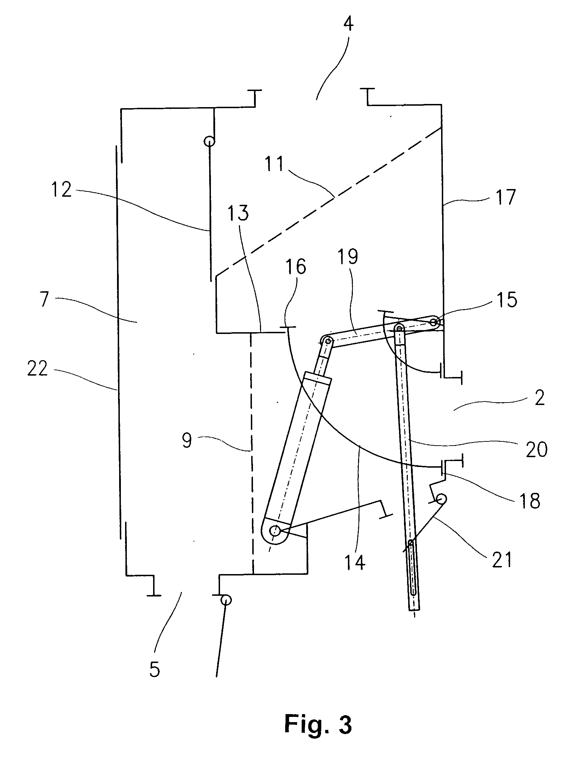

Examples of embodiment are schematically shown in enclosed drawings in which Fig. 1 shows connection of a filtering unit, Fig. 2 is a cross section of the filtering unit in operating state, Fig. 3 is a cross section of filtering unit by the time of cleaning a main screen.

### Specific description

A device for continuous removing of impurities from operating units of a textile machine consisting of a source of working vacuum **1** sucking off the air from an outlet throat **2** of a filtering unit **3**.

The filtering unit **3** is on the outside coat fitted with an inlet throat **4**, the outlet throat **2** and an automatic cleaning throat **5.** Under the action of vacuum is polluted air sucked into the inlet throat **4** from operating units **6** which are the source of creation of impurities in the machine.

There is the source of working vacuum **1** connected to the outlet throat **2**. To the automatic cleaning throat **5** of a main screen **9** there is a source **8** of cleaning vacuum connected which can be integrated to the source of working vacuum **1.**

The filtering unit **3** by itself consists of the main screen **9** and an auxiliary **11** screen. The space behind the inlet throat **4** in front the auxiliary screen **11** and the main screen **9** are connected or separated by an automatic flap **12** controlled by the pressure difference in these spaces. In a separating wall **13** between the auxiliary screen **11** and the main screen **9** there is formed a hole sealed by the switching element **14** which is in the mentioned example carried out like a tipping elbow tipped along a circle with the centre point in the axis **15** of radius of its curvature.

In the operation state the switching element **14** is placed in the space behind the auxiliary screen **11,** his top flange **16** seals on the back wall **17.** The lower flange **18** in this position seals from the bottom the hole in the separating wall **13.**

The movement of the switching element **14** is induced for instance by a hydraulic or a pneumatic roll acting on a control lever **19** which is connected except the switching element **14** with a draw bar **20** acting on an atmospheric air flap valve **21.** In the operating state the atmospheric air flap valve **21** is closed.

According to vacuum in front of the main screen **9** induced during the operation state by the action of the working vacuum source **1** the automatic flap **12** is open, polluted air enters along the auxiliary screen **11** into the space in front of the main screen **9** and by the passage through them gets rid of impurities and is sucked off by the action of the working vacuum source **1.**

In the case when the main screen **9** is polluted, which can be signalled for instance by a pressure switch, the switching element **14** tips over anticlockwise into the space behind the main screen **9** and thus connects the space behind the auxiliary screen **11** with the working vacuum source **1,** the atmospheric air flap valve **21** is opened by the control lever **19** by the means of the draw bar **20.** In the space in front of the main screen **9** is increased absolute pressure and the automatic flap **12** is closed. Polluted air is cleaned on the auxiliary screen **11,** in the space of the main screen **9** there is atmospheric pressure and after opening a detachable cover **22** the main screen **9** can be cleaned by hand.

Cleaning can be advantageously performed unattended after connecting the automatic cleaning throat **5** to the cleaning vacuum source **8** while the impurities stuck to the main screen **9** are cleaned by the passage of air sucked through the main screen **9** by the cleaning vacuum source **8** from the opened hole of the atmospheric air flap valve **21.** It is advantageous if the functional surface of the main screen **9** is perpendicular.

## Claims

1. A device for continuous removing impurities from vacuum air exhausted from a textile machine comprising a filtering unit positioned between a collecting device of sucked off operating units of the machine and a source of working vacuum, **characterized by** that a filtering unit (3) consists of one filter chamber (7), fitted with a polluted air inlet throat (4), an auxiliary screen (11), a main screen (9) and a purified air outlet throat (2), while the spaces behind the auxiliary screen (11) and the main screen (9) are mutually separated by a switching element (14) connecting alternatively the space behind the main screen (9) or behind the auxiliary screen (11) with the outlet throat (2).

2. A device as claimed in Claim 1, **characterized by** that the filter chamber (7) consists of an atmospheric air flap valve (21) where its control is coupled with adjusting the switching element (14).

3. A device as claimed in Claims 1 and 2, **characterized by** that in the common space behind the inlet throat (4) an automatic flap (12) is placed which in its closed position separates the space behind the inlet throat (4) that the connection between the inlet throat (4) and the space in front of the main screen (9) is closed and the flap in its turn is controlled by a pressure difference in the space in front of the main screen (9) and the auxiliary screen (11).

4. A device as claimed in Claims 1 to 3, **characterized by** that the working surface of the auxiliary screen (11) is approximately parallel to the direction of the polluted air flow by the time the automatic flap (12) is open.

5. A device as claimed in Claims 1 to 4, **characterized by** that the space in front of the main screen (9) is fitted with a lockable automatic cleaning throat (5) connected to a cleaning vacuum source (8) which in its turn can be integrated with the working vacuum source (1).
